# EUROPEAN PATENT SPECIFICATION

(11) **EP 2 442 697 B1**
(45) Date of publication and mention of the grant of the patent: **27.08.2014**
(21) Application number: 09796116.3
(22) Date of filing: 30.12.2009
(51) Int. Cl.: A47J 31/36, A47J 31/06, B65D 85/804

(54) **SYSTEM, APPARATUS AND METHOD FOR PREPARING A BEVERAGE**
SYSTEM, KAPSEL UND VERFAHREN ZUR HERSTELLUNG EINES GETRÄNKS
SYSTÈME, DISPOSITIF ET PROCÉDÉ DE PRÉPARATION DE BOISSON

(30) Priority: 17.06.2009 EP 09162988
(43) Date of publication of application: 25.04.2012
(73) Proprietor: Koninklijke Douwe Egberts B.V., 3532 AD Utrecht (NL)
(72) Inventor: KAMERBEEK, Ralf, 3454 EJ De Meern (NL); POST VAN LOON, Angenita, Dorothea, 3544 DT Utrecht (NL); KOELING, Hendrik, Cornelis, 3826 BE Amersfoort (NL)
(74) Representative: Jansen, Cornelis Marinus
(86) International application number: PCT/NL2009/050823
(87) International publication number: WO 2010/137955

(56) References cited:
- EP-A- 1 344 722
- EP-A- 1 555 219
- WO-A-2006/111807
- WO-A-2006/126104
- WO-A-2007/122208

## Description

The invention relates to a system for preparing a predetermined quantity of beverage suitable for consumption using an extractable product, comprising an exchangeable capsule, and an apparatus comprising a receptacle for holding the exchangeable capsule, and a fluid dispensing device for supplying an amount of a fluid, such as water, under pressure to the exchangeable capsule, wherein the exchangeable capsule comprises a circumferential wall, a bottom closing the circumferential wall at a first end, and a lid closing the circumferential wall at a second end opposite the bottom, wherein the wall, bottom and lid enclose an inner space comprising the extractable product, wherein the bottom comprises an entrance area and the system is arranged for bringing the fluid dispensing device in fluid connection with the entrance area for supplying the fluid to the extractable product for preparing the beverage, wherein the lid comprises an exit area and the system comprises an outlet which, in use, is in fluid communication with the exit area for draining the prepared beverage from the capsule and supplying the beverage to a container such as a cup, wherein the capsule of the system is an open capsule and wherein the exit area of capsule comprises an exit filter provided in the lid of said capsule for draining the prepared beverage there through.

Such systems are known per se. In such a system an open capsule comprising the extractable product may be used to prepare a beverage. An open capsule comprises at least an exit area that is open to ambient atmosphere, although the open capsule may be contained in an e.g. airtight outer package. The open exit area may comprise an exit filter that is arranged to drain the prepared beverage there through. The known systems may be used for preparing the beverage using a hermetically sealed, e.g. prior art, closed capsule comprising the extractable product. A prior art apparatus of the system may therefore at least be provided with lid piercing means. During beverage preparation, the entrance area of such, e.g. prior art, closed capsule is first pierced by bottom piercing means arranged in the prior art apparatus, hence providing at least one entrance opening for supplying the fluid under pressure to the exchangeable product in the inner space of the capsule through the entrance opening. Providing the fluid under pressure to the inner space causes the pressure in the inner space of the capsule to rise. This, in turn, causes the exit area of the, e.g. prior art, closed capsule to be pressed against lid piercing means present in the support surface of the receptacle. When the exit area is pressed against the lid piercing means with sufficient force, the exit area tears against the lid piercing means creating at least one exit opening through which the beverage can drain from the capsule.

When the above mentioned open capsule is used in the prior art apparatus of the system comprising lid piercing means, the lid of the open capsule is not pierced by the lid piercing means of the prior art apparatus since the exit filter is adapted to stay intact when contacting the lid piercing means of the prior art apparatus.

When preparing a beverage with the prior art system using an open capsule having an exit filter that is not pierced, for certain types of beverages to be prepared the flow speed of the fluid through the beverage may be too low to obtain said type of beverage with a desired quality within a desired preparing time period.

It is therefore an object of the invention to provide a system according to the above described type, wherein the advantages of the known system are maintained and the disadvantages of the known system are at least partly overcome. More in particular, it is an object of the invention to provide a system for preparing a predetermined quantity of beverage wherein the fluid flow speed can be increased when using an open capsule.

Thereto, according to a first aspect of the invention, is provided a system for preparing a predetermined quantity of beverage suitable for consumption using an extractable product, comprising: an exchangeable capsule, and an apparatus of a first type comprising a receptacle for holding the exchangeable capsule, and a fluid dispensing device for supplying an amount of a fluid, such as water, under pressure to the exchangeable capsule, wherein the exchangeable capsule comprises a circumferential wall, a bottom closing the circumferential wall at a first end, and a lid closing the circumferential wall at a second end opposite the bottom, wherein the wall, bottom and lid enclose an inner space comprising the extractable product, herein the bottom comprises an entrance area and the system is arranged for bringing the fluid dispensing device in fluid connection with the entrance area for supplying the fluid to the extractable product for preparing the beverage, herein the lid comprises an exit area and the system comprises an outlet which, in use, is in fluid communication with the exit area for draining the prepared beverage from the capsule and supplying the beverage to a container such as a cup, wherein the capsule of the system is an open capsule and wherein the exit area of capsule comprises an exit filter provided in the lid of said capsule for draining the prepared beverage there through, wherein the exit filter of the open capsule, when being used in an apparatus of a second type, such as a prior art apparatus, that comprises lid piercing means intended for piercing a lid of a, e.g. prior art, closed capsule, in use is not pierced by the lid piercing means of the apparatus of the second type and the exit filter of the open capsule stays intact, wherein the receptacle of the apparatus of the system comprises exit filter piercing means intended for piercing the exit filter of the capsule for creating at least one additional opening in the exit filter, wherein the exit filter piercing means and the exit filter are adapted to each other such that the exit filter that is not pierced in the apparatus of the second type is pierced by the exit filter piercing means to provide an enlarged flow of prepared beverage from the capsule to the outlet of the system.

Thus, by providing exit filter piercing means that are adapted to the exit filter of the open capsule such that during use of the system the exit filter may be pierced by the exit filter piercing means, at least one additional, for instance larger, outflow opening next to the openings already available in the exit filter may be provided in the exit filter. Hence, due to such an additional opening the prepared beverage may be drained from the capsule under an increased speed. This may be advantageous when for instance a coffee longo is to be prepared, wherein the quantity of prepared beverage is larger than for instance when an espresso is prepared. This results in a faster outflow of the prepared beverage resulting in a desired preparation time of the beverage. Furthermore, by providing the exit filter piercing means also the strength of the beverage may be influenced. The exit filter piercing means may comprise a piercing plate arranged adjacent a support surface of the receptacle. The piercing elements preferably extend from the piercing plate towards the exit filter of the capsule.

It is noted that EP 1,555,219 discloses a cartridge for preparing a coffee beverage. Said cartridge comprises a cartridge body having a cup-like shaped lower portion and a cover portion, wherein the cup-like shaped lower portion has a bottom portion and an upper region. The cartridge further comprises a lower filter element located inside the cup-like shaped lower portion between the coffee powder and the bottom portion. The capsule further comprises a distribution member provided between the coffee powder and the cover portion. The distribution member and the lower filter element are provided with apertures that are evenly distributed over the respective surfaces of the distribution member and the filter element.

In further elaboration of the invention, the exit filter piercing means may comprise at least one piercing element that has a sharp piercing surface. Preferably, the sharp piercing surface has a sharpness that is adapted to pierce the exit filter of the open capsule, more specifically to pierce the exit filter material of the open capsule that is not pierced with the lid piercing means of the, e.g. prior art, apparatus of the second type of the system.

According to a further aspect of the invention, the sharp piercing surface may have a radius of curvature that is smaller than 50µm, preferably smaller than 30µm, more preferably smaller than 20µm. Furthermore, the at least one piercing element has a piercing angle that is ≤ 60°, preferably that is ≤ 45°, more preferably that is ≤ 30°, wherein the piercing angle is defined by an angle enclosed by opposing piercing element sides seen in a piercing direction. The piercing direction may be defined as a direction from the piercing plate towards the exit filter of the open capsule of the system.

According to another aspect of the invention, the exit filter piercing means may comprise a plurality of piercing elements that may be arranged in a piercing pattern. Different piercing patterns may be provided, for instance dependent on the desired fluid flow through the capsule in order to prepare a special type of coffee. For instance, the piercing pattern may comprise a plurality of piercing elements that are adapted to create little additional openings in the exit filter. The piercing patter may instead comprise a few piercing elements that are adapted to create a few larger additional openings in the exit filter. With the latter pattern a different fluid flow may be created through the extractable product provided in the open capsule than with the first mentioned piercing pattern. A lot of different patterns may be provided comprising different piercing elements and different amounts of piercing elements that are arranged in different compositions on the piercing plate.

It is possible that the exit filter piercing means are arranged for piercing the exit filter upon contact, e.g. while closing the apparatus. It is also possible that the exit filter piercing means are arranged for piercing the exit filter under the influence of the pressure of the fluid, such as water, in the capsule.

Furthermore, to control the fluid flow in a predetermined manner, the piercing elements of the piercing pattern may comprise different sharp piercing surfaces with different radii of curvature. Thus, not all piercing elements of the same piercing pattern may have a similar sharp piercing surface with a similar radius of curvature.

In order to provide a multi-functional system for preparing a beverage, the exit filter piercing means may be removably arranged in the apparatus. Consequently, dependent on the kind of beverage to be prepared, the most suitable exit filter piercing means may be chosen. Furthermore, the exit filter piercing means may also be chosen in dependence of a certain type of exit filter, for instance a certain type of material and/or comprising a certain amount of openings with certain dimensions, provided in the open capsule. For example, if the exit filter is of a more elastic material, the piercing elements may be more sharp than if the exit filter comprises a less elastic material.

Optionally, the system further comprises an apparatus of the second type that comprises lid piercing means intended for piercing a lid of a closed capsule, wherein the pierced by the lid piercing means of the apparatus of the second type are arranged for leaving the exit filter of the open capsule intact.

The invention also relates to a method for preparing a predetermined quantity of beverage suitable for consumption using an extractable product, comprising providing an exchangeable capsule, comprising a circumferential wall, a bottom closing the circumferential wall at a first end, and a lid closing the circumferential wall at a second end opposite the bottom, wherein the wall, bottom and lid enclose an inner space comprising the extractable product, wherein the capsule is an open capsule comprising an exit filter in the lid of the capsule, providing an apparatus of a first type comprising a receptacle for holding the exchangeable capsule, a fluid dispensing device for supplying an amount of a fluid, such as water, under pressure to the exchangeable capsule, and an outlet which, in use, is in fluid communication with the capsule for draining the prepared beverage from the capsule and supplying the beverage to a container such as a cup, wherein the exit filter of the open capsule, when being used in an, e.g. prior art, apparatus of a second type that comprises lid piercing means intended for piercing a lid of a, e.g. prior art, closed capsule, in use is not pierced by the lid piercing means of the, e.g. prior art, apparatus of the second type such that the exit filter of the open capsule stays intact, wherein the receptacle of the apparatus of the first type of the system comprises exit filter piercing means that pierces the exit filter of the capsule to create at least one additional opening in the exit filter, wherein the exit filter piercing means and the exit filter cooperate such that the exit filter that is not pierced in the, e.g. prior art, apparatus of the second type is pierced by the exit filter piercing means and provides an enlarged flow of prepared beverage draining from the capsule to the outlet of the system, and supplying the fluid to the extractable product for preparing the beverage. Such a method provides similar effects and advantages as mentioned with the above described system.

These and other features and advantages of the invention will be more fully understood from the following detailed description of certain embodiments of the invention, taken together with the accompanying drawings, which are meant to illustrate and not to limit the invention.

The invention will now be further elucidated by means of, nonlimiting, examples referring to the drawing, in which
Fig. 1 schematically shows a prior art apparatus for preparing a beverage comprising an open capsule;
Fig. 2 schematically shows a first embodiment of the system according to the invention;

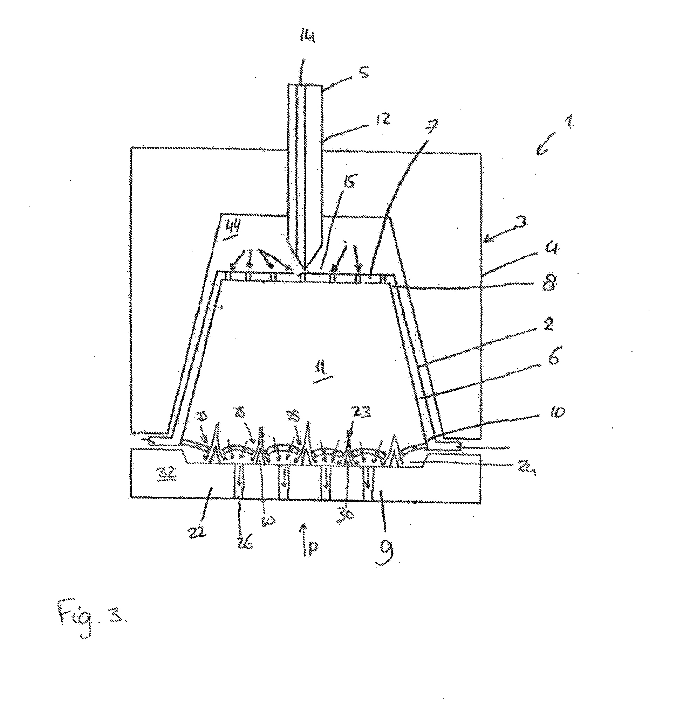

Fig. 3 schematically shows the first embodiment of the system in operation; and
Figs. 4-6 schematically show different embodiments of exit filter piercing means of an apparatus of the system according the invention.

It is noted that identical or corresponding elements in the different drawings are indicated with identical or corresponding reference numerals.

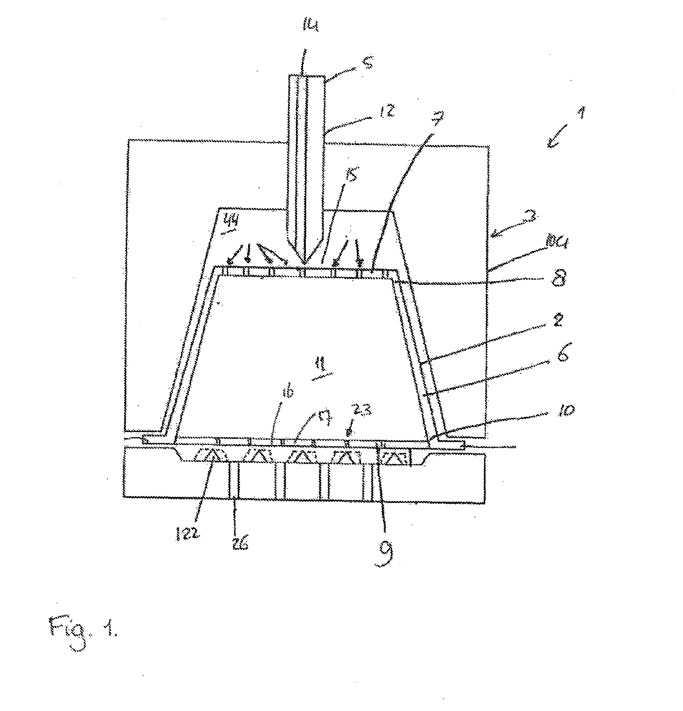

Fig 1 shows a prior art apparatus 104 for preparing a predetermined quantity of beverage suitable for consumption using an extractable product. The apparatus 104 comprises an exchangeable open capsule 2. The apparatus 104 comprises a receptacle 3 for holding the exchangeable open capsule 2. Commonly, the receptacle 3 has a shape at least partly complementary to the shape of the capsule 2. The apparatus 104 further comprises a fluid dispensing device 5 for supplying an amount of a fluid, such as water, under a pressure, of e.g. 9 bars, to the exchangeable capsule 2.

The exchangeable open capsule 2, as provided in the receptacle 3 of the apparatus 104, comprises a substantially rigid circumferential wall 6, a bottom 7 closing the circumferential wall 6 at a first end 8, and a lid 9 closing the circumferential wall 6 at a second end 10 opposite the bottom 7. The circumferential wall 6, the bottom 7 and the lid 9 enclose an inner space 11 comprising the extractable product. The circumferential wall 6 of the capsule 2 may e.g. comprise a plastics material and may be formed by e.g. injection moulding, vacuum-forming, thermoforming or the like. Also, in the example of Figure 1, the circumferential wall 10 is frusto-conical, but other shapes are also possible. For example, the circumferential wall may be cylindrical or pyramidal. Preferably, the extractable product comprises an amount of roasted and ground coffee.

The apparatus 104 comprises bottom piercing means 12 intended for piercing a prior art closed capsule (not shown). The bottom piercing means 12 comprise a bore 14 through which the fluid can be supplied to the extractable product contained in the inner space of the prior art closed capsule. The open capsule 2 as provided in the apparatus 104 is not pierced by the bottom piercing means 12. The fluid from the fluid dispensing device 5 enters the cavity 44 provided between the receptacle 3 and the open capsule 2 through the bore 14. The open capsule 2 comprises an entrance filter 15 provided in the bottom 7 adapted to drain fluid from the cavity 44 to the inner space 11 of the open capsule 2 for extracting desired substances from the extractable product, in this example approximately 5-6.5 grams of roasted and ground coffee, for preparing, in this example a single cup of beverage from 30-100 ml, here espresso. The bottom 7 of the open capsule 2 comprises an entrance area, formed by the entrance filter 15 which is positioned at a distance from the bottom piercing means 12. The apparatus 104 is arranged for bringing the fluid dispensing device 5 in fluid connection with the entrance area for supplying the fluid to the extractable product for preparing the beverage.

The open capsule 2 is further provided with an exit area 16 forming exit filter 17. The exit filter 17 is provided with openings 23 adapted to drain the prepared beverage from the capsule 2 to the outlet 26 of the system 104. The exit filter 17 comprises a flexible sheet-shaped perforate and/or porous material, in this embodiment a flexible foil such as a polymeric film with a plurality of openings 23 through which the beverage can drain from the capsule 2. The flexible foil may be a multilayer foil of a polyethyleneterephthalate (PET-P) layer of approximately 12µm and a chlorinated polypropylene (CPP) layer of approximately 30µm. The flexible foil may also be a multilayer foil of a PET-P layer of approximately 15µm and a CPP layer of approximately 30µm. In this example, the exit filter comprises 75-170 openings for instance 100-170 opening, preferably 90-150 openings for instance 110-150 openings, more preferably 100-125 openings. The exit filter may also comprise approximately145 openings. The opening diameter may be between 0,4mm ± 0.05mm and 0.2mm ± 0.05mm, preferably approximately 0,3mm± 0.05mm. These openings enable the prepared beverage to drain from the capsule 2.

The apparatus 104 further comprises lid piercing means 122, here embodied as protrusions with a relatively blunt piercing surface, intended for piercing the lid of a prior art closed capsule (not shown). The exit filter 17 of the open capsule 2 according to Figure 1 is not pierced by the lid piercing means 26. The exit filter 17 is sufficiently strong and sufficiently stiff not to be pierced by the lid piercing means 122 of the prior art apparatus of the system 1 under the influence of the pressure inside the capsule 2. Under influence of the pressure inside the capsule 2, the exit filter 17 may deform against the lid piercing means 122, but it may not tear, rupture or be pierced by the lid piercing means such that the exit filter 17 stays intact under influence of the pressure. The system 104 as shown in Figure 1 can be used in advantage to prepare an amount of beverage such as espresso. However, when preparing a larger amount of beverage, for instance 120-200ml from the same open capsule, for instance a coffee longo, the fluid flow through the capsule may be to slow, resulting in a relatively long preparation time and in a cup of coffee that may be over extracted for its desired purpose.

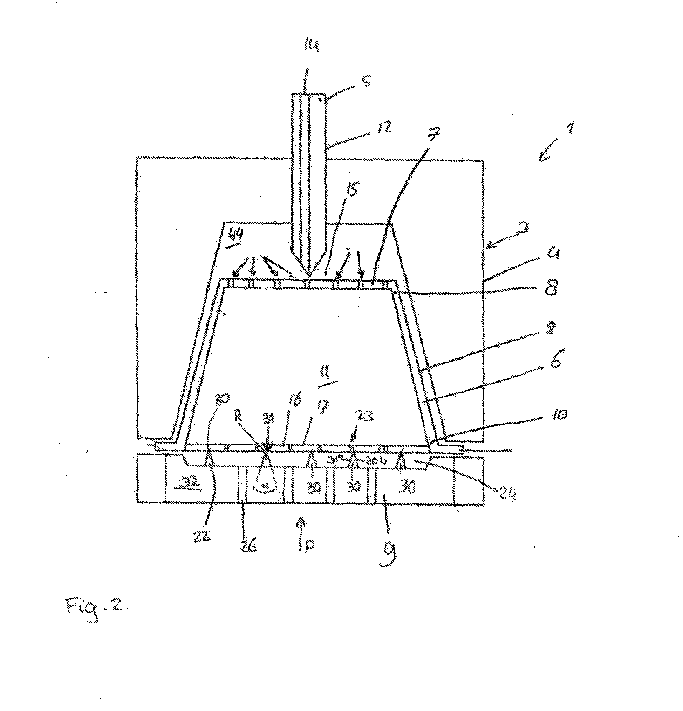

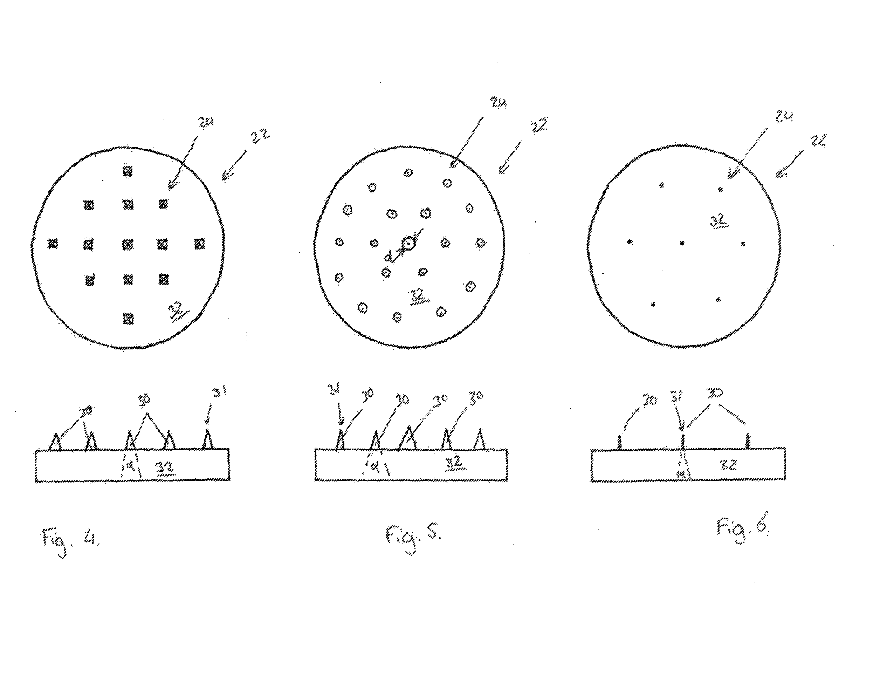

Therefore, the system 1 according to the invention as shown in Figure 2 is provided. For the sake of clarity, only the elements that differ from the system 1 as shown and described with Figure 1 will be described here in detail. The apparatus 4 according to the invention is provided with exit filter piercing means 22 that is adapted to cooperate with the exit filter 17 of the open capsule such that in use the exit filter 17 that is not pierced by the lid piercing means 122 of the prior art apparatus is actually pierced by the exit filter piercing means 22 according to the invention. The exit filter piercing means 22 according to this example comprises a plurality of piercing elements 30 that extend in the piercing direction P from the piercing plate 32 towards the exit filter 17 of the open capsule 2. The piercing elements 30 have a sharp piercing surface 31 with a radius of curvature R that is smaller than 50µm, preferably smaller than 30µm, more preferably smaller than 20µm. Such a sharp piercing surface is able to pierce the exit filter 17 that is relatively deformable and/or elastically due to its material properties. The piercing elements 30 may have a piercing angle α that is smaller than 60°, in this example smaller than 45°. In another example of the system 1 according to the invention, the piercing angle α may even be smaller than 30°. The piercing angle α may be defined by angle enclosed by opposing piercing element sides 30a, 30b seen in a piercing direction P (see Figure 2). In the shown example, the piercing elements are arranged in a piercing pattern 24 so as to pierce the exit filter 17 on different locations along the entire surface of the exit filter 17. The exit filter piercing means 22 may be removably arranged in the apparatus 4. The exit filter piercing means 22 may be removed and replaced with another kind of exit filter piercing means 22 for instance dependent on the kind of beverage to be prepared. Different exit filter piercing means 22 are shown in Figures 4-6.

The system 1 as shown in Figure 2 is operated as follows for preparing a cup of for instance coffee longo, wherein the extractable product is roasted and ground coffee and the amount of beverage to be prepared is approximately 120-200ml.

The open capsule 2 comprising the exit filter 17 is placed in the receptacle 3 such that the exit filter 17 faces the exit filter piercing means 22. The receptacle 3 is closed. Then the fluid, here hot water under pressure, is supplied to the extractable product in the inner space 11 through the opening 13 via the bore 14 provided in the piercing means 12. Preferably, the fluid dispensing device 5 is arranged for supplying the fluid to the open capsule 2 under a pressure of approximately 4-20 bars, preferably 9-15 bars. During preparing of the beverage, the fluid from the fluid dispensing device 5 enters the cavity 44 provided between the receptacle 3 and the open capsule 2 through the bore 14. The entrance filter 15 is adapted to drain fluid from the cavity 44 to the inner space 11 of the open capsule 2 for extracting desired substances from the extractable product. Providing the fluid under pressure to the inner space 11 causes the pressure in the capsule 2 to rise such that the exit filter 17 is pressed against the exit filter piercing means 22.

Since the exit filter 17 and the exit filter piercing means 22 are adapted to each other, the piercing elements 30 pierce the exit filter 17 when it is pressed against the sharp piercing surfaces 31 of the piercing elements 30 due to the fluid pressure. The piercing elements 30 create additional openings 25 in the exit filter next to the openings 23 of the exit filter 17. These additional openings 25 provide for an increased fluid flow through the capsule 2. Thus, the water will wet the coffee grounds and extract the desired substances to form the coffee beverage with a desired quality. The fluid will pass through the capsule 2 with an increased flow speed such that an amount of 120-200ml coffee may be prepared within an acceptable preparation time. The prepared coffee will drain from the capsule 2 and may be supplied to a container such as a cup (not shown). Preferably, the additional openings 25 are formed such that when removing the used capsule 2 from the receptacle 3 of the apparatus 4, the roast and ground coffee stays inside the capsule.

In Figures 4-6, three further embodiments of the exit filter piercing means 22 according to the invention are shown. Said exit filter piercing means 22 can be used in a system 1 according to the invention. The piercing means 22 comprise a piercing plate 32 from which an amount of sharp piercing elements 30 extends in a direction away from the plate 32. The piercing elements 30 have a sharp piercing surface 31 that is sharp enough to pierce the exit filter 17 of the open capsule 2 according to the invention, which exit filter 17 is not pierced by lid piercing means 122 of a prior art apparatus 104 of the system 1. Thus, the piercing elements 30 have to overcome a piercing resistance of the exit filter 17. The piercing elements 30 can be arranged in different patterns 24 as can be seen in Figure 4-6. Each of the exit filter piercing means 22 can be provided in the receptacle 3 of the apparatus, for instance dependent on a desired beverage to be prepared. The amount of piercing elements 30 may vary, as well as the radius of curvature R of the sharp piercing surface 31 of the respective elements 30. Furthermore, the piercing angle α may vary as well as the location of the separate piercing elements 30 on the piercing plate. The piercing elements 30 may have different cross sections in a plane extending substantially parallel to the piercing plate 32, such as a square or circular cross section. Furthermore, the cross sections of the piercing elements in a plane extending substantially perpendicular to the piercing plate 32 may also have different shapes. The piercing pattern 24 may comprise different piercing elements 30 as can be seen in Figure 5. The centre piercing element 30 has a larger diameter d than the other piercing elements 30. In case the system 1 is used to prepare a cup of espresso from an open capsule 2, the exit filter piercing means 22 may be removed from the apparatus 4 and be replaced with a support plate without piercing elements of with protrusions that are not able to overcome the piercing resistance of the exit filter 17 of the capsule.

In the foregoing specification, the invention has been described with reference to specific examples of embodiments of the invention. It will, however, be evident that various modifications and changes may be made therein without departing from the broader spirit and scope of the invention as set forth in the appended claims. For instance, the capsule may have different dimensions and be made of different material. Furthermore, the capsule 2 may only have an exit filter 17 and no entrance filter. For supplying the fluid to the inner space of the capsule, the bottom piercing means of the system may be used. It is also possible that the apparatus of the system does not comprise bottom piercing means and has a different fluid dispensing device to supply fluid to the inner space of the capsule. Also different kinds of exit filter piercing means may be used to pierce the exit filter of the capsule, as long as the piercing resistance of the exit filter of the capsule is overcome by the piercing elements.

In the examples, the apparatus 104 is a prior art apparatus. It is also possible that the apparatus 104 is an alternative apparatus. It is possible to provide the apparatus 4 of the first type and the apparatus 104 of the second type simultaneously. It is also possible that the apparatus 104 of the first type and the apparatus 4 of the second type are integrated into one machine. It will be appreciated that also with such variants the desired advantages may be obtained.

However, other modifications, variations and alternatives are also possible. The specifications, drawings and examples are, accordingly, to be regarded in an illustrative rather than in a restrictive sense.

In the claims, any reference signs placed between parentheses shall not be construed as limiting the claim. The word 'comprising' does not exclude the presence of other features or steps then those listed in a claim. Furthermore, the words 'a' and 'an' shall not be construed as limited to 'only one', but instead are used to mean 'at least one', and do not exclude a plurality. The mere fact that certain measures are recited in mutually different claims does not indicate that a combination of these measures cannot be used to advantage.

## Claims

1. System for preparing a predetermined quantity of beverage suitable for consumption using an extractable product, comprising:
an exchangeable capsule (2), and
an apparatus (4) of a first type comprising a receptacle (3) for holding the exchangeable capsule (2), and a fluid dispensing device (5) for supplying an amount of a fluid, such as water, under pressure to the exchangeable capsule (2),
wherein the exchangeable capsule (2) comprises a circumferential wall (6), a bottom (7) closing the circumferential wall (6) at a first end (8), and a lid (9) closing the circumferential wall (6) at a second end (10) opposite the bottom (9), wherein the wall, bottom and lid enclose an inner space comprising the extractable product,
wherein the bottom (7) comprises an entrance area and the system is arranged for bringing the fluid dispensing device in fluid connection with the entrance area for supplying the fluid to the extractable product for preparing the beverage,
wherein the lid (9) comprises an exit area and the system (1) comprises an outlet (26) which, in use, is in fluid communication with the exit area for draining the prepared beverage from the capsule (2) and supplying the beverage to a container such as a cup,
**characterized in that** the capsule of the system is an open capsule (2) and wherein the exit area of capsule comprises an exit filter (17) provided in the lid of said capsule for draining the prepared beverage there through, wherein the exit filter of the open capsule (2), when being used in an apparatus (104) of a second type that comprises lid piercing means (122) intended for piercing a lid of a closed capsule (102), in use is not pierced by the lid piercing means (122) of the apparatus of the second type and the exit filter of the open capsule (2) stays intact,
wherein the receptacle (3) of the apparatus (4) of the first type of the system (1) comprises exit filter piercing means intended for piercing the exit filter of the capsule for creating at least one additional opening (25) in the exit filter, wherein the exit filter piercing means (22) and the exit filter (17) are adapted to each other such that the exit filter that is not pierced in the apparatus (104) of the second type is pierced by the exit filter piercing means (22) to provide an enlarged flow of prepared beverage from the capsule to the outlet of the system.

2. System according to claim 1, wherein the exit filter piercing means (22) comprises at least one piercing element (30) that has a sharp piercing surface (31).

3. System according to claim 2, wherein the sharp piercing surface has a radius of curvature (R) that is smaller than 50µm, preferably smaller than 30µm, more preferably smaller than 20µm.

4. System according to any one of claims 2-3, wherein the at least one piercing element (30) has a piercing angle (α) that is ≤ 60°, preferably that is ≤ 45°, more preferably that is ≤ 30°, wherein the piercing angle is defined by an angle enclosed by opposing piercing element sides (30a, 30b) seen in a piercing direction (P).

5. System according to any one of claims 2-4, wherein the exit filter piercing means (22) comprises a plurality of piercing elements (30), which piercing elements are arranged in a piercing pattern (24).

6. System according to claim 5, wherein the piercing elements of the piercing pattern (24) comprise different sharp piercing surfaces with different radii of curvature.

7. System according to any one of the preceding claims, wherein the exit filter piercing means (22) are removably arranged in the apparatus of the first type.

8. System according to any one of the preceding claims, wherein the exit filter (17) is formed by a flexible sheet-shaped perforate and/or porous material, such as a filtering paper or a flexible foil such as a polymeric film provided with a plurality of exit openings (23).

9. System according to claim 8, wherein the flexible foil is a multilayer foil of polyethyleneterephthalate (PET-P) and chlorinated polypropylene (CPP).

10. System according claim 9, wherein the foil comprises a first layer of polyethyleneterephthalate with a thickness of approximately 15µm and a second layer of chlorinated polypropylene of approximately 30µm.

11. System according to any one of the preceding claims, wherein the exit filter comprises 75-170 openings (23), preferably 90-150, more preferably approximately 100-125 openings, wherein an opening diameter is between 0,4mm ± 0.05mm and 0.2mm ± 0.05mm, preferably approximately 0,3mm± 0.05mm.

12. System according to any one of the preceding claims, further comprising an apparatus (104) of the second type that comprises lid piercing means (122) intended for piercing a lid of a closed capsule (102), wherein the lid piercing means (122) of the apparatus of the second type are arranged for leaving the exit filter of the open capsule (2) intact.

13. Method for preparing a predetermined quantity of beverage suitable for consumption using an extractable product, comprising:
providing an exchangeable capsule (2), comprising a circumferential wall (6), a bottom (7) closing the circumferential wall at a first end (8), and a lid (9) closing the circumferential wall at a second end (10) opposite the bottom, wherein the wall, bottom and lid enclose an inner space (11) comprising the extractable product, wherein the capsule is an open capsule (2) comprising an exit filter (15) in the lid of the capsule,
providing an apparatus (4) of a first type comprising a receptacle (3) for holding the exchangeable capsule, a fluid dispensing device (5) for supplying an amount of a fluid, such as water, under pressure to the exchangeable capsule, and an outlet (26) which, in use, is in fluid communication with the capsule for draining the prepared beverage from the capsule (2) and supplying the beverage to a container such as a cup, **characterized in that** the exit filter (15) of the open capsule, when being used in an apparatus (104) of a second type that comprises lid piercing means (122) intended for piercing a lid of a closed capsule, in use is not pierced by the lid piercing means of the apparatus of the second type such that the exit filter of the open capsule (2) stays intact
wherein the receptacle (3) of the apparatus (4) of the first type of the system (1) comprises exit filter piercing means (22) that pierces the exit filter (17) of the capsule to create at least one additional opening (25) in the exit filter, wherein the exit filter piercing means (22) and the exit filter (17) cooperate such that the exit filter that is not pierced in the apparatus (104) of the second type is pierced by the exit filter piercing means and provides an enlarged flow of prepared beverage draining from the capsule to the outlet of the system, and
supplying the fluid to the extractable product for preparing the beverage.

## Patentansprüche

1. System zum Zubereiten einer vorbestimmten Menge eines für den Konsum geeigneten Getränks unter Verwendung eines extrahierbaren Produkts, umfassend:
eine austauschbare Kapsel (2) und
eine Vorrichtung (4) eines ersten Typs, umfassend ein Behältnis (3) zum Aufnehmen der austauschbaren Kapsel (2) und eine Flüssigkeitsabgabevorrichtung (5), um eine Menge einer Flüssigkeit, wie beispielsweise Wasser, unter Druck der austauschbaren Kapsel (2) zuzuführen,
wobei die austauschbare Kapsel (2) eine umlaufende Wand (6), einen Boden (7), der die umlaufende Wand (6) an einem ersten Ende (8) abschließt, und einen Deckel (9), der die umlaufende Wand (6) an einem zweiten Ende (10) gegenüber dem Boden (9) abschließt, umfasst, wobei die Wand, der Boden und der Deckel einen Innenraum, der das extrahierbare Produkt enthält, einschließen,
wobei der Boden (7) einen Eingangsbereich umfasst, und das System so angeordnet ist, dass es die Flüssigkeitsabgabevorrichtung in Flüssigkeitskontakt mit dem Eingangsbereich bringt, um die Flüssigkeit dem extrahierbaren Produkt zum Zubereiten des Getränks zuzuführen,
wobei der Deckel (9) einen Ausgangsbereich umfasst, und das System (1) einen Auslass (26) umfasst, der bei Verwendung in Flüssigkeitskommunikation mit dem Ausgangsbereich ist, um das zubereitete Getränk aus der Kapsel (2) abzulassen und das Getränk einem Behälter, wie beispielsweise einer Tasse, zuzuführen,
**dadurch gekennzeichnet, dass** die Kapsel des Systems eine offene Kapsel (2) ist, und wobei der Ausgangsbereich der Kapsel einen im Deckel der Kapsel vorgesehenen Ausgangsfilter (17) umfasst, um das zubereitete Getränk durch diesen abzulassen, wobei der Ausgangsfilter der offenen Kapsel (2) bei Verwendung in einer Vorrichtung (104) eines zweiten Typs, die Deckeldurchstechmittel (122) zum Durchstechen eines Deckels einer geschlossenen Kapsel (102) umfasst, bei Verwendung nicht von den Durchstechmitteln (122) der Vorrichtung des zweiten Typs durchstochen wird, und der Ausgangsfilter der offenen Kapsel (2) intakt bleibt,
wobei das Behältnis (3) der Vorrichtung (4) des ersten Typ des Systems (1) Ausgangsfilter-Durchstechmittel zum Durchstechen des Ausgangsfilters der Kapsel umfasst, um mindestens eine zusätzliche Öffnung (25) in dem Ausgangsfilter zu schaffen, wobei die Ausgangsfilter-Durchstechmittel (22) und der Ausgangsfilter (17) so aneinander angepasst sind, dass der Ausgangsfilter, der nicht in der Vorrichtung (104) des zweiten Typs durchstochen wird, von den Ausgangsfilter-Durchstechmitteln (22) durchstochen wird, um einen vergrößerten Fluss des zubereiteten Getränks von der Kapsel zum Auslass des Systems bereitzustellen.

2. System nach Anspruch 1, wobei die Ausgangsfilter-Durchstechmittel (22) mindestens ein Durchstechelement (30) mit einer spitzen Durchstechfläche (31) umfassen.

3. System nach Anspruch 2, wobei die spitze Durchstechfläche einen Krümmungsradius (R) aufweist, der kleiner als 50 µm, bevorzugt kleiner als 30 µm, noch mehr bevorzugt kleiner als 20 µm ist.

4. System nach einem der Ansprüche 2-3, wobei das mindestens eine Durchstechelement (30) einen Durchstechwinkel (α) aufweist, der ≤ 60°, bevorzugt ≤ 45°, noch mehr bevorzugt ≤ 30° ist, wobei der Durchstechwinkel durch einen Winkel definiert ist, der durch gegenüberliegende Durchstechelementseiten (30a, 30b), gesehen in einer Durchstechrichtung (P), definiert ist.

5. System nach einem der Ansprüche 2-4, wobei die Ausgangsfilter-Durchstechmittel (22) eine Vielzahl Durchstechelemente (30) umfassen, die in einem Durchstechmuster (24) angeordnet sind.

6. System nach Anspruch 5, wobei die Durchstechelemente des Durchstechmusters (24) verschiedene spitze Durchstechflächen mit verschiedenen Krümmungsradien aufweisen.

7. System nach einem der vorhergehenden Ansprüche, wobei die Ausgangsfilter-Durchstechmittel (22) entfernbar in der Vorrichtung des ersten Typs angeordnet sind.

8. System nach einem der vorhergehenden Ansprüche, wobei der Ausgangsfilter (17) von einem flexiblen, bogenförmigen perforierten und/oder porösen Material wie beispielsweise Filterpapier oder einer flexiblen Folie wie Polymerfilm, versehen mit mehreren Ausgangsöffnungen (23), gebildet wird.

9. System nach Anspruch 8, wobei die flexible Folie eine mehrschichtige Folie aus Polyethylenterephthalat (PET-P) und chloriertem Polypropylen (CPP) ist.

10. System nach Anspruch 9, wobei die Folie eine erste Schicht aus Polyethylenterephthalat mit einer Dicke von ungefähr 15 µm und einer zweiten Schicht aus chloriertem Polypropylen von ungefähr 30 µm umfasst.

11. System nach einem der vorhergehenden Ansprüche, wobei der Ausgangsfilter 75-170 Öffnungen (23), bevorzugt 90-150, noch mehr bevorzugt ungefähr 100-125 Öffnungen umfasst, wobei ein Öffnungsdurchmesser zwischen 0,4 mm ± 0,05 mm und 0,2 mm ± 0,05 mm, bevorzugt ungefähr 0,3 mm ± 0,05 mm ist.

12. System nach einem der vorhergehenden Ansprüche, ferner umfassend eine Vorrichtung (104) des zweiten Typs, die Deckeldurchstechmittel (122) vorgesehen zum Durchstechen eines Deckels einer geschlossenen Kapsel (102) umfasst, wobei die Durchstechmittel (122) der Vorrichtung des zweiten Typs so angeordnet sind, dass sie den Ausgangsfilter der offenen Kapsel (2) intakt lassen.

13. Verfahren zum Zubereiten einer vorbestimmten Menge eines für den Konsum geeigneten Getränks unter Verwendung eines extrahierbaren Produkts, umfassend:
das Bereitstellen einer austauschbaren Kapsel (2), umfassend eine umlaufende Wand (6), einen Boden (7), der die umlaufende Wand an einem ersten Ende (8) abschließt, und einen Deckel (9), der die umlaufende Wand an einem zweiten Ende (10) gegenüber dem Boden abschließt, wobei die Wand, der Boden und der Deckel einen Innenraum (11) einschließen, der das extrahierbare Produkt enthält, wobei die Kapsel eine offene Kapsel (2) ist, umfassend einen Ausgangsfilter (15) im Deckel der Kapsel,
das Bereitstellen einer Vorrichtung (4) eines ersten Typs, umfassend ein Behältnis (3) zum Aufnehmen der austauschbaren Kapsel, eine Flüssigkeitsabgabevorrichtung (5), um eine Menge einer Flüssigkeit wie beispielsweise Wasser unter Druck der austauschbaren Kapsel zuzuführen, und einen Auslass (26), der bei Verwendung in Flüssigkeitskommunikation mit der Kapsel ist, um das zubereitete Getränk aus der Kapsel (2) abzulassen, und das Getränk einem Behälter, wie beispielsweise einer Tasse, zuzuführen, **dadurch gekennzeichnet, dass** der Ausgangsfilter (15) der offenen Kapsel bei Verwendung in einer Vorrichtung (104) eines zweiten Typs, der Deckeldurchstechmittel (122) zum Durchstechen eines Deckels einer geschlossenen Kapsel bei Verwendung nicht von den Deckeldurchstechmitteln der Vorrichtung des zweiten Typs durchstochen wird, sodass der Ausgangsfilter der offenen Kapsel (2) intakt bleibt,
wobei das Behältnis (3) der Vorrichtung (4) des ersten Typs des Systems (1) Ausgangsfilter-Durchstechmittel (22) umfasst, die den Ausgangsfilter (17) der Kapsel durchstechen, um mindestens eine zusätzliche Öffnung (25) im Ausgangsfilter zu schaffen, wobei die Ausgangsfilter-Durchstechmittel (22) und der Ausgangsfilter (17) so zusammenwirken, dass der Ausgangsfilter, der nicht in der Vorrichtung (104) des zweiten Typs durchstochen wird, von den Ausgangsfilter-Durchstechmitteln durchstochen wird und einen vergrößerten Fluss des zubereiteten Getränks von der Kapsel zum Auslass des Systems bereitstellt, und
das Zuführen der Flüssigkeit zum extrahierbaren Produkt zum Zubereiten des Getränks.

## Revendications

1. Système pour préparer une quantité de boisson prédéterminée appropriée pour la consommation, utilisant un produit extractible, comprenant :
une capsule échangeable (2), et
un appareil (4) d'un premier type comprenant un réceptacle (3) pour maintenir la capsule échangeable (2) et un dispositif de distribution de fluide (5) pour amener une quantité d'un fluide, tel que de l'eau, sous pression à la capsule échangeable (2),
dans lequel la capsule échangeable (2) comprend une paroi circonférentielle (6), un fond (7) fermant la paroi circonférentielle (6) au niveau d'une première extrémité (8), et un couvercle (9) fermant la paroi circonférentielle (6) au niveau d'une seconde extrémité (10) opposée au fond (9), dans lequel la paroi, le fond et le couvercle enferment un espace interne comprenant le produit extractible,
dans lequel le fond (7) comprend une zone d'entrée et le système est agencé pour amener le dispositif de distribution de fluide en raccordement de fluide avec la zone d'entrée pour amener le fluide au produit extractible afin de préparer la boisson,
dans lequel le couvercle (9) comprend une zone de sortie et le système (1) comprend une sortie (26) qui, à l'usage, est en communication de fluide avec la zone de sortie pour faire sortir la boisson préparée de la capsule (2) et amener la boisson à un récipient tel qu'une tasse,
**caractérisé en ce que** la capsule du système est une capsule ouverte (2) et dans lequel la zone de sortie de la capsule comprend un filtre de sortie (17) prévu dans le couvercle de ladite capsule pour faire sortir la boisson préparée par ce dernier, dans lequel le filtre de sortie de la capsule ouverte (2), lorsqu'il est utilisé dans un appareil (104) d'un second type qui comprend des moyens de perçage de couvercle (122) prévus pour percer un couvercle d'une capsule fermée (102), à l'usage, n'est pas percé par les moyens de perçage de couvercle (122) de l'appareil de second type, et le filtre de sortie de la capsule ouverte (2) reste intact,
dans lequel le réceptacle (3) de l'appareil (4) du premier type du système (1) comprend des moyens de perçage de filtre de sortie prévus pour percer le filtre de sortie de la capsule afin de créer au moins une ouverture supplémentaire (25) dans le filtre de sortie, dans lequel les moyens de perçage de filtre de sortie (22) et le filtre de sortie (17) sont adaptés l'un par rapport à l'autre de sorte que le filtre de sortie qui n'est pas percé dans l'appareil (104) du second type, est percé par les moyens de perçage de filtre de sortie (22) afin de fournir un écoulement plus important de la boisson préparée, de la capsule à la sortie du système.

2. Système selon la revendication 1, dans lequel les moyens de perçage de filtre de sortie (22) comprennent au moins un élément de perçage (30) qui a une surface de perçage pointue (31).

3. Système selon la revendication 2, dans lequel la surface de perçage pointue a un rayon de courbure (R) qui est inférieur à 50 µm, de préférence inférieur à 30 µm, encore de préférence inférieur à 20 µm.

4. Système selon l'une quelconque des revendications 2 à 3, dans lequel le au moins un élément de perçage (30) a un angle de perçage (α) qui est ≤ 60°, de préférence qui est ≤ 45°, encore de préférence qui est ≤ 30°, dans lequel l'angle de perçage est défini par un angle enfermé par les côtés d'élément de perçage opposés (30a, 30b) observés dans une direction de perçage (P).

5. Système selon l'une quelconque des revendications 2 à 4, dans lequel les moyens de perçage de filtre de sortie (22) comprennent une pluralité d'éléments de perçage (30), lesquels éléments de perçage sont agencés selon un modèle de perçage (24).

6. Système selon la revendication 5, dans lequel les éléments de perçage du modèle de perçage (24) comprennent différentes surfaces de perçage pointues avec différents rayons de courbure.

7. Système selon l'une quelconque des revendications précédentes, dans lequel les moyens de perçage de filtre de sortie (22) sont agencés de manière amovible dans l'appareil du premier type.

8. Système selon l'une quelconque des revendications précédentes, dans lequel le filtre de sortie (17) est formé par un matériau poreux et/ou perforé en forme de feuille souple tel qu'un papier filtre ou une feuille souple telle qu'un film polymère, prévu avec une pluralité d'ouvertures de sortie (23).

9. Système selon la revendication 8, dans lequel la feuille souple est une feuille multicouche de polyéthylène téréphtalate (PET-P) et de polypropylène chloré (CPP).

10. Système selon la revendication 9, dans lequel la feuille comprend une première couche de polyéthylène téréphtalate avec une épaisseur d'approximativement 15 µm et une seconde couche de polypropylène chloré d'approximativement 30 µm.

11. Système selon l'une quelconque des revendications précédentes, dans lequel le filtre de sortie comprend 75 - 170 ouvertures (23), de préférence 90 -150, encore de préférence approximativement 100 - 125 ouvertures, dans lequel un diamètre d'ouverture est compris entre 0,4 mm ± 005 mm et 0,2 mm ± 0,05 mm, de préférence approximativement 0,3 mm ± 0,05 mm.

12. Système selon l'une quelconque des revendications précédentes, comprenant en outre un appareil (104) du second type qui comprend des moyens de perçage de couvercle (122) prévus pour percer un couvercle d'une capsule fermée (102), dans lequel les moyens de perçage de couvercle (122) de l'appareil de second type sont agencés pour laisser le filtre de sortie de la capsule ouverte (2) intact.

13. Procédé pour préparer une quantité de boisson prédéterminée appropriée pour la consommation, utilisant un produit extractible, comprenant les étapes consistant à :
prévoir une capsule échangeable (2), comprenant une paroi circonférentielle (6), un fond (7) fermant la paroi circonférentielle au niveau d'une première extrémité (8) et un couvercle (9) fermant la paroi circonférentielle au niveau d'une seconde extrémité (10) opposée au fond, dans lequel la paroi, le fond et le couvercle enferment un espace interne (11) comprenant le produit extractible, dans lequel la capsule est une capsule ouverte (2) comprenant un filtre de sortie (15) dans le couvercle de la capsule,
prévoir un appareil (4) d'un premier type comprenant un réceptacle (3) pour maintenir la capsule échangeable, un dispositif de distribution de fluide (5) pour amener une quantité d'un fluide, tel que de l'eau, sous pression à la capsule échangeable, et une sortie (26) qui, à l'usage, est en communication de fluide avec la capsule pour faire sortir la boisson préparée par la capsule (2), et amener la boisson à un récipient tel qu'une tasse, **caractérisé en ce que** le filtre de sortie (15) de la capsule ouverte, lorsqu'il est utilisé dans un appareil (104) de second type qui comprend des moyens de perçage de couvercle (122) prévus pour percer un couvercle d'une capsule fermée, à l'usage, n'est pas percé par les moyens de perçage de couvercle de l'appareil du second type, de sorte que le filtre de sortie de la capsule ouverte (2) reste intact,
dans lequel le réceptacle (3) de l'appareil (4) du premier type du système (1) comprend des moyens de perçage de filtre de sortie (22) qui percent le filtre de sortie (17) de la capsule afin de créer au moins une ouverture supplémentaire (25) dans le filtre de sortie, dans lequel les moyens de perçage de filtre de sortie (22) et le filtre de sortie (17) coopèrent de sorte que le filtre de sortie qui n'est pas percé dans l'appareil (104) du second type, est percé par les moyens de perçage de filtre de sortie et fournit un écoulement plus important de la boisson préparée sortant de la capsule vers la sortie du système, et
amener le fluide au produit extractible pour préparer la boisson.
